# EUROPÄISCHE PATENTSCHRIFT

(11) **EP 2 397 927 B1**
(45) Veröffentlichungstag und Bekanntmachung des Hinweises auf die Patenterteilung: **16.05.2018**
(21) Anmeldenummer: 11004107.6
(22) Anmeldetag: 18.05.2011
(51) Int. Cl.: G05D 23/19, F24H 9/20

(54) **Verfahren zur Temperatursteuerung eines Warmwasserspeichers und Warmwasserspeicher**
Method for regulating the temperature of a hot water boiler and hot water boiler
Procédé de commande de température d'un accumulateur d'eau chaude et accumulateur d'eau chaude

(30) Priorität: 17.06.2010 DE 102010024100
(43) Veröffentlichungstag der Anmeldung: 21.12.2011
(73) Patentinhaber: Stiebel Eltron GmbH & Co. KG, 37603 Holzminden (DE)
(72) Erfinder: Nolte, Ralf-Reiner, 37671 Höxter (DE); Krämer, Radolf, 37671 Höxter (DE)

(56) Entgegenhaltungen:
- EP-A1- 0 592 771
- WO-A1-95/30324
- WO-A2-2010/061268
- FR-A1- 2 252 722
- US-A- 5 968 393
- US-A1- 2005 150 967
- US-B1- 6 375 087

## Beschreibung

Die Erfindung betrifft ein Verfahren zur Temperatursteuerung eines Warmwasserspeichers mit einer Regelelektronik zur Regelung der Aufheiztemperatur des Warmwasserspeichers regelt und wenigstens einem Temperaturfühler.

Gemäß dem Stand der Technik wird bei elektrischen Warmwasserspeichern die Warmwassertemperatur über einen Regler geregelt. Dieser Regler wird häufig beim Hersteller auf eine maximale Temperatur eingestellt, beispielsweise auf 85° C. Wird das Gerät beim Benutzer in Betrieb genommen, bleibt die werkseitig eingestellte Temperatur so lange erhalten, bis der Benutzer sie manuell ändert. Sofern der Benutzer die werkseitig eingestellte Temperatur nicht ändert, arbeitet das Gerät weiter mit der werkseitig eingestellten Maximaltemperatur. Hierbei sind die Wärmeverluste deutlich höher als im Betrieb mit einer niedrigen Temperatur.

Die CH 213451 zeigt einen Temperaturregler für elektrisch beheizte Warmwasserspeicher, bei dem ein Thermostatschalter bei Über- oder Unterschreiten einer bestimmten Temperatur den Heizstromkreis unterbricht oder schließt, wobei dem Thermostatschalter ein von Hand zugeschalteter mechanischer Widerstand zugeordnet ist. Nach erfolgter Aufheizung des Speicherinhaltes auf eine gewünschte höhere Temperatur schaltet der Temperaturschalter selbsttätig auf eine niedrigere Regeltemperatur.

Die EP 0 592 771 A1 beschreibt ein Verfahren zur Steuerung der Brauchwassertemperatur einer Brauchwasseranlage. In einem ersten, zwischen einem ersten und einem zweiten Zeitpunkt verlaufenden Zeitbereich arbeitet die Brauchwasseranlage in einer Nennbetriebsart. Zu einer bestimmten Uhrzeit wird die Brauchwasseranlage in eine Sparbetriebsart umgeschaltet. Unterschreitet die Brauchwassertemperatur einen bestimmten Schwellwert, wird die
Brauchwasser über die Spartemperatur hinaus automatisch stark aufgeheizt.

Die WO 2010/061268 A2 beschreibt ein Verfahren zur Regelung der Temperatur eines Warmwasserspeichers. Vorgesehen ist eine selbstlernende Regelelektronik, die abhängig vom Nutzerverhalten die Aufheizung des Speichers regelt. Entnimmt der Nutzer wenig Wasser, wird der Speicher in einem Standby-Modus betrieben und entnimmt der Nutzer viel Wasser, so wird der Speicher auf eine Maximalsolltemperatur aufgeheizt. Bestimmte Regelmäßigkeiten im Nutzerverhalten werden ausgewertet und entsprechend vorausschauend angewendet.

US 2005/150967 A1 stellt eine Energiesparsteuerung für einen Warmwasserbereiter über einen intelligenten Thermostaten bereit. Dieses intelligente Thermostat ermöglicht eine programmgesteuerte Steuerung des HVAC-Systems und bietet eine koordinierte Kontrolle über den Sollwert des Warmwasserspeichers. Diese Steuerung über den Warmwasserbereiter erfolgt über ein Kommunikationsnetzwerk zwischen dem intelligenten Thermostaten und dem Warmwasserbereiter. In einer Ausführungsform sind die Kommunikationen drahtlos, obwohl verdrahtet und Netzwerkbus-Kommunikationen können ebenfalls verwendet werden. Eine verbesserte und koordinierte Steuerung wird ebenfalls bereitgestellt, so dass unterschiedliche Betriebstemperaturzyklen bereitgestellt werden können, um mit der programmgesteuerten Steuerung des HVAC-Systems durch den intelligenten Thermostat zu koordinieren. Eine getrennte programmgesteuerte Steuerung des Warmwasserspeichers ist ebenfalls vorgesehen, wodurch verschiedene Betriebstemperaturmoden befohlen werden können,

Ausgehend vom Stand der Technik liegt der Erfindung die Aufgabe zugrunde, ein Verfahren zur Temperatursteuerung eines Warmwasserspeichers aufzuzeigen, bei dem keine unnötigen Wärmeverluste auftreten und der energiesparend arbeitet.

Erfindungsgemäß ist die obige Aufgabe durch die Merkmale des Anspruchs 1 gelöst. Vorteilhafte Ausführungen der Erfindung sind in den Unteransprüchen gegeben.

Danach wird eine erste Maximalsolltemperatur vorgegeben. Sodann überprüft eine Regelelektronik über einen definierten Beobachtungszeitraum, ob eine Änderung der ersten Maximalsolltemperatur auf eine zweite Maximalsolltemperatur erfolgt. Nach Ablauf des Beobachtungszeitraums nimmt die Regelelektronik eine selbsttätige Änderung der ersten Maximalsolltemperatur vor, wenn innerhalb des Beobachtungszeitraums keine Änderung der ersten Maximalsolltemperatur erfolgt, indem sie auf eine dritte Maximalsolltemperatur schaltet, die niedriger ist als die erste Maximalsolltemperatur. Dabei ist unerheblich, ob die dritte Maximalsolltemperatur höher oder niedriger ist als die zweite Maximalsolltemperatur. Wird also das Gerät, bei dem werkseitig eine Maximalsolltemperatur, beispielsweise 85°C, eingestellt ist, in Betrieb genommen, überprüft die Regelelektronik über einen bestimmten Beobachtungszeitraum, ob der Benutzer manuell eine Änderung der Maximalsolltemperatur vornimmt. Nimmt der Benutzer eine solche Änderung vor, wird das Gerät mit der vom Benutzer ausgewählten Temperatur weiter betrieben. Nimmt der Benutzer eine manuelle Temperaturänderung innerhalb des Beobachtungszeitraums nicht vor, schaltet die Regelelektronik eine Temperaturabsenkung auf eine für die übliche Warmwasserbereitung ausreichende Temperatur, beispielsweise auf eine Temperatur von 60°C. Hierdurch sind die Wärmeverluste des Geräts gering gehalten, so dass das Gerät energiesparend arbeitet.

Vorzugsweise zeigt der Warmwasserspeicher dem Benutzer die selbsttätige Änderung der ersten Maximalsolltemperatur auf die dritte Maximalsolltemperatur an. In einer bevorzugten Ausgestaltung der Erfindung erfolgt die Anzeige durch ein Symbol in einem Display des Warmwasserspeichers oder durch eine Leuchtdiode. In einer weiteren Ausgestaltung der Erfindung ist das Display bei Änderung der ersten Maximalsolltemperatur hinterleuchtet oder farblich verändert. Die Anzeige der Änderung der Betriebstemperatur hat den Vorteil, dass der Benutzer die Änderung der Temperatur erkennt und nicht fälschlicherweise von einem Defekt ausgeht, wenn die Maximalsolltemperatur nach der selbsttätigen Änderung niedriger ist als vor der Änderung.

Dies ist vor allem bei Geräten ohne aktive Anzeige der derzeitigen Solltemperatur wichtig. Bei einem Sollwertsteller in Form eines Potentiometers wird der Benutzer aus der Position des Sollwertgeberknopfes auf die Solltemperatur schließen. Wird das Gerät in Betrieb genommen entspricht in einem Ausführungsbeispiel ein Rechtsanschlag des Sollwertgeberknopfes der werksseitig eingestellten ersten Maximalsolltemperatur von beispielsweise 85°C. Wird die Temperatur nach Ablauf des Beobachtungszeitraums auf die dritte Maximalsolltemperatur, beispielsweise 60°C abgesenkt, ändert sich die Stellung des Potentiometers und damit auch des Sollwertgeberknopfes nicht, so dass nach der Absenkung der Rechtsanschlag des Sollwertgeberknopfes nunmehr der dritten Maximalsolltemperatur entspricht. Der Benutzer würde bei der Kontrolle der Sollwertgeberstellung einen Fehler vermuten, da der Sollwertgeberknopf zwar die gleiche Position aufweist, die Maximalsolltemperatur jedoch nach der nach Ablauf des Beobachtungszeitraums geschalteten selbsttätigen Absenkung niedriger ist. Durch eine Anzeige der Änderung ist die geänderte Temperatur für den Benutzer erkennbar.

In einem weiteren Ausführungsbeispiel schaltet die Regelelektronik die dritte Maximalsolltemperatur auf Anforderung eines Benutzers vorübergehend auf eine vierte Maximalsolltemperatur, wobei die vierte Maximalsolltemperatur höher ist als die dritte Maximalsolltemperatur. Durch diese Boost-Funktion wird die Änderung der Maximalsolltemperatur auf die dritte Maximalsolltemperatur vorübergehend außer Kraft gesetzt, wenn der Benutzer für eine kurze Zeit eine höhere Maximalsolltemperatur benötigt, ohne dass es sich lohnen würde, hierfür eine längerfristige Änderung der Maximalsolltemperatur vorzunehmen. Vorzugsweise wird dabei der Sollwertgeberknopf zunächst wenigstens teilweise zurückgedreht und anschließend wieder hochgedreht. Bei Verwendung eines Potentiometers entspricht ansonsten der Rechtsanschlag des Sollwertgeberknopfes der dritten Maximalsolltemperatur, so dass ein Schalten oder Drehen auf eine höhere vierte Maximalsolltemperatur nicht möglich wäre. In einer weiteren Ausgestaltung der Erfindung ist eine Schalttaste vorgesehen, mit der die Boost-Funktion aktiviert wird.

Vorzugsweise nimmt die Regelelektronik nach Ablauf des Beobachtungszeitraums eine selbsttätige Änderung der vierten Maximalsolltemperatur auf die dritte Maximalsolltemperatur vor, wenn innerhalb des Beobachtungszeitraums keine Änderung der vierten Maximalsolltemperatur erfolgt. Sollte der Benutzer innerhalb des Beobachtungszeitraumes vergessen, die Boost-Funktion wieder zu deaktivieren, schaltet die Regelelektronik nach Ablauf des Beobachtungszeitraumes wieder auf die dritte Maximalsolltemperatur, um zu vermeiden, dass der Warmwasserspeicher mit einer hohen Maximalsolltemperatur betrieben wird, obwohl dies an sich nicht notwendig ist. Hierdurch werden unnötige Wärmeverluste vermieden.

In einer weitere bevorzugten Ausgestaltung der Erfindung erfolgt in einem ersten Schritt eine Änderung der ersten Maximalsolltemperatur auf die zweite Maximalsolltemperatur und in einem zweiten Schritt eine weitere Änderung von der zweiten Maximalsolltemperatur auf die vierte Maximalsolltemperatur. Vorzugsweise überprüft dabei die Regelelektronik anschließend in dem Beobachtungszeitraum, ob eine weitere Änderung von der vierten Maximalsolltemperatur auf die zweite Maximalsolltemperatur erfolgt, wobei die Regelelektronik nach Ablauf des Beobachtungszeitraums die selbsttätige Änderung der vierten Maximalsolltemperatur auf die zweite Maximalsolltemperatur vornimmt, wenn innerhalb des Beobachtungszeitraums keine Änderung der vierten Maximalsolltemperatur erfolgt. Dies betrifft den Fall, dass der Benutzer nach der Inbetriebnahme des Warmwasserspeichers in einem ersten Schritt eine manuelle Änderung der werkseitig eingestellten ersten Maximalsolltemperatur auf die zweite Maximalsolltemperatur vornimmt und in einem zweiten Schritt die Boost-Funktion aktiviert, indem er eine Änderung der zweiten Maximalsolltemperatur auf die vierte Maximalsolltemperatur vornimmt. Anschließend überprüft die Regelelektronik in einem Beobachtungszeitraum, ob der Benutzer die vierte Maximalsolltemperatur selbst wieder absenkt. Tut er dies nicht, so schaltet die Regelelektronik nach Ablauf des Beobachtungszeitraums selbsttätig auf die vom Benutzer zuvor eingestellte zweite Maximalsolltemperatur zurück.

In einer weiteren Ausgestaltung der Erfindung schaltet die Regelelektronik nach Ablauf des Beobachtungszeitraums auf die dritte Maximalsolltemperatur.

Vorzugsweise erfolgt die Beobachtung und Absenkung der Temperatur nach der Inbetriebnahme des Warmwasserspeichers. In einer weiteren bevorzugten Ausgestaltung der Erfindung wird das Absenkverfahren auch dann durchgeführt, wenn der Benutzer eine Änderung der werkseitig eingestellten ersten Maximalsolltemperatur auf eine zweite Maximalsolltemperatur vorgenommen hat, die höher ist als die hinterlegte dritte Maximalsolltemperatur, und diese vom Benutzer eingestellte zweite Maximalsolltemperatur über einen längeren Zeitraum vom Benutzer nicht geändert wurde. Um zu vermeiden, dass die zweite Maximalsolltemperatur nur deshalb eingestellt bleibt, weil der Benutzer schlichtweg vergessen hat, sie weiter abzusenken, nimmt die Regelung nach Ablauf eines bestimmten Zeitraums eine selbsttätige Änderung auf die dritte Maximalsolltemperatur vor.

Vorzugsweise wird diese Prozedur wiederholt, wenn der Benutzer die Temperatur anschließend wieder auf eine höhere zweite Maximalsolltemperatur stellt.

In einer weiteren bevorzugten Ausgestaltung der Erfindung wird der Zeitraum zwischen dem Ändern der Temperatur durch den Benutzer und der selbsttätigen Absenkung der Temperatur immer länger, d.h. in einem ersten Zyklus erfolgt die Absenkung beispielsweise 10 Tage nachdem der Benutzer die Temperatur geändert hat. Nimmt der Benutzer sodann wieder eine Änderung vor, erfolgt die Absenkung in einem zweiten Zyklus nach 20 Tagen usw, bis die Temperatur dauerhaft bei dem vom Benutzer eingestellten Wert verbleibt. Hierdurch ist erreicht, dass einerseits die Regelung zwar kontrolliert, dass der Benutzer die Absenkung der Temperatur nicht vergisst, andererseits sich die Temperatur aber auf die Temperatur einpendelt, die der Benutzer tatsächlich wünscht.

Nimmt der Benutzer nach einer mehrmaligen automatischen Absenkung über einen definierten Zeitraum keine Änderung der Temperatur vor und nimmt er eine Änderung später nach Ablauf dieses Zeitraums vor, verkürzt sich vorzugsweise der Zeitraum bis zur nächsten automatischen Absenkung wieder auf das ursprüngliche Zeitintervall, in diesem Beispiel auf 10 Tage.

Weiterhin betrifft die Erfindung einen Warmwasserspeicher mit einer Temperatursteuerung.

In der Zeichnung zeigen
- Figur 1: ein Diagramm mit einer selbsttätigen Temperaturabsenkung in einem Ausführungsbeispiel
- Figur 2: ein Diagramm mit einer Boost-Funktion in einem Ausführungsbeispiel
- Figur 3: ein Diagramm mit einer Boost-Funktion in einem weiteren Ausführungsbeispiel

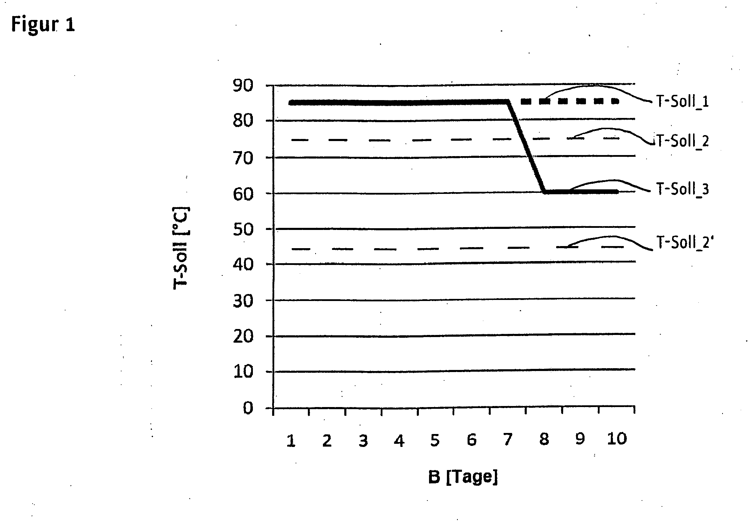

In Figur 1 ist ein Diagramm mit einer selbsttätigen Temperaturabsenkung in einem Ausführungsbeispiel gezeigt. Dargestellt ist die Temperatur T-Soll eines Warmwasserspeichers in einem Beobachtungszeitraum B (in Tagen). Der Warmwasserspeicher wird an Tag 1 mit einer werkseitig eingestellten ersten Maximalsolltemperatur T-Soll_1 von ca. 85°C in Betrieb genommen. Innerhalb der nächsten Tage überprüft die Regelelektronik, ob der Benutzer manuell eine Änderung der ersten Maximalsolltemperatur T-Soll_1 auf eine zweite Maximalsolltemperatur T-Soll_2 vornimmt. Nimmt der Benutzer innerhalb des Beobachtungszeitraums B, hier 7 Tage, eine solche Änderung nicht vor, so schaltet die Regelelektronik nach Ablauf des Beobachtungszeitraums, also an Tag 7, selbsttätig auf die dritte Maximalsolltemperatur T-Soll_3. Nimmt der Benutzer eine Änderung der ersten Maximalsolltemperatur T-Soll_1 auf die zweite Maximalsolltemperatur T-Soll_2 vor, so wird der Warmwasserspeicher mit dieser Temperatur T-Soll_2 weiter betrieben. Dabei ist unerheblich, ob die zweite Maximalsolltemperatur höher (T-Sott_2) oder niedriger (T-Soll_2') ist als die dritte Maximalsolltemperatur T-Soll_3.

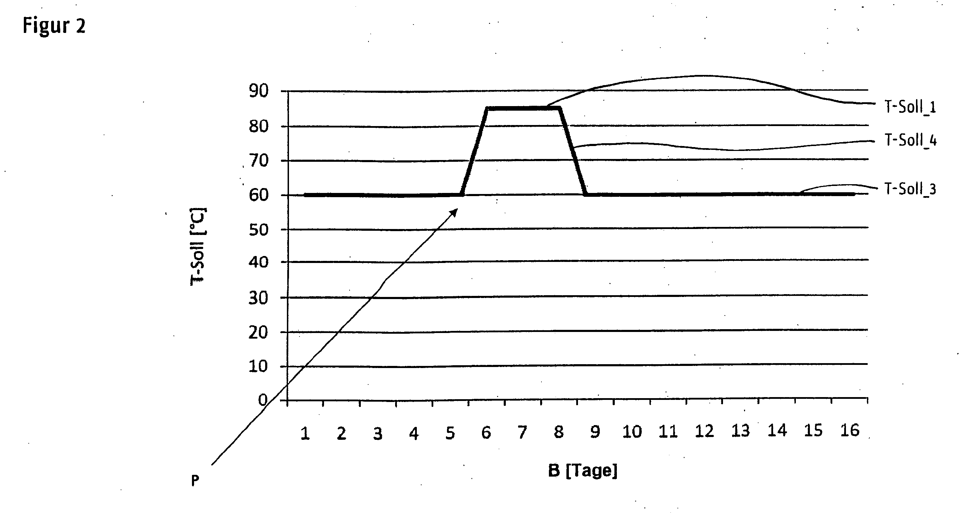

Figur 2 zeigt ein Diagramm mit einer Boost-Funktion in einem Ausführungsbeispiel. Dieses Ausführungsbeispiel betrifft den Fall aus Figur 1, dass die Regelelektronik nach Ablauf des Beobachtungszeitraums selbsttätig auf die dritte Maximalsolltemperatur T-Soll_3, hier 60°C, schaltet, weil der Benutzer keine Änderung der werkseitig eingestellten ersten Maximalsolltemperatur T-Soll_1 vorgenommen hat. Im Zeitpunkt P, hier an Tag 5, aktiviert der Benutzer die Boost-Funktion, indem er auf die vierte Maximalsolltemperatur T-Sott_4 schaltet. Die vierte Maximalsolltemperatur T-Sott_4 ist dabei höher als die dritte Maximalsolltemperatur T-Soll_3, ist jedoch durch die erste Maximalsolltemperatur T-Soll_1 begrenzt. Innerhalb des Beobachtungszeitraumes B, hier 2 Tage, nimmt der Benutzer keine Änderung der vierten Maximalsolltemperatur T-Soll_4 vor, so dass die Regelelektronik nach Ablauf des Beobachtungszeitraums B wieder auf die dritte Maximalsolltemperatur T-Soll_3 schaltet. Dadurch entstehen beim Betrieb des Warmwasserspeichers keine unnötigen Wärmeverluste.

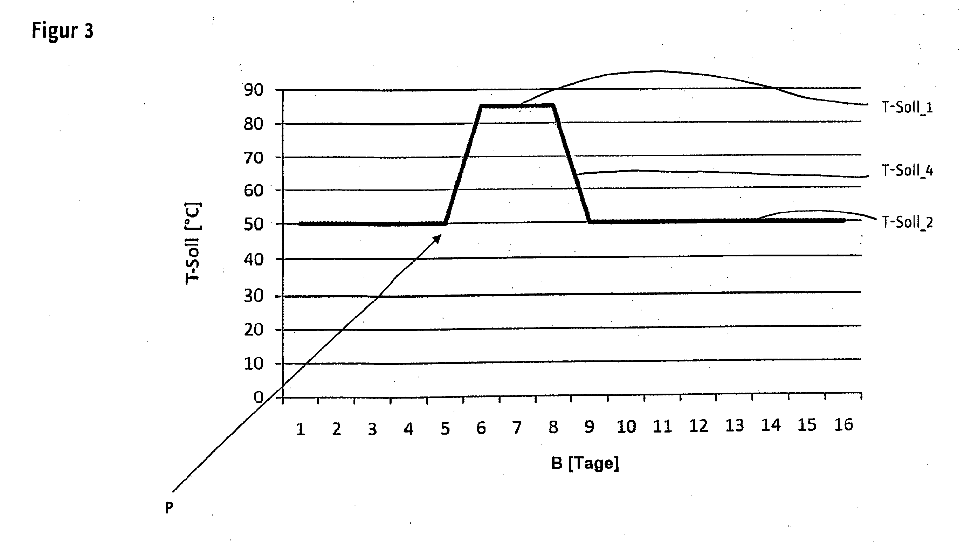

In Figur 3 ist ein Diagramm mit einer Boost-Funktion in einem weiteren Ausführungsbeispiel gezeigt. Dieses Ausführungsbeispiel betrifft den Fall, dass der Benutzer manuell eine Änderung der werkseitig eingestellten ersten Maximalsolltemperatur T-Soll_1 auf die zweite Maximalsolltemperatur T-Soll_2, hier 50°C vorgenommen hat. Im Zeitpunkt P, hier an Tag 5, aktiviert der Benutzer die Boost-Funktion, indem er auf die vierte Maximalsolltemperatur T-Sott_4 schaltet. Die vierte Maximalsolltemperatur T-Soll_4 ist dabei höher als die zweite Maximalsolltemperatur T-Soll_2, ist jedoch durch die erste Maximalsolltemperatur T-Soll_1 begrenzt. Innerhalb des Beobachtungszeitraumes B, hier 2 Tage, nimmt der Benutzer keine Änderung der vierten Maximalsolltemperatur T-Sott_4 vor, so dass die Regelelektronik nach Ablauf des Beobachtungszeitraums B wieder auf die zweite Maximalsolltemperatur T-Soll_2 schaltet. Dadurch entstehen beim Betrieb des Warmwasserspeichers keine unnötigen Wärmeverluste.

## Patentansprüche

1. Verfahren zur Temperatursteuerung eines Warmwasserspeichers mit einer Regelelektronik zur Regelung der Aufheiztemperatur des Warmwasserspeichers und wenigstens einem Temperaturfühler,
wobei die Regelelektronik eine Maximalsolltemperatur (T-Soll_1) vorgibt, **dadurch gekennzeichnet,**
- **dass** die Regelelektronik zunächst über einen definierten Beobachtungszeitraum (B) überprüft, ob ein Benutzer eine manuelle Änderung der ersten Maximalsolltemperatur (T-Soll_1) auf eine zweite Maximalsolltemperatur (T-Soll_2) vornimmt, und
- **dass** die Regelelektronik eine selbsttätige Änderung der ersten Maximalsolltemperatur (T-Soll_1) auf eine dritte Maximalsolltemperatur (T-Soll_3) dann und nur dann schaltet, wenn innerhalb des Beobachtungszeitraums (B) ein Benutzer keine manuelle Änderung der ersten Maximalsolltemperatur (T-Soll_1) auf die zweite Maximalsolltemperatur (T-Soll_2) vornimmt, wobei die dritte Maximalsolltemperatur (T-Soll_3) niedriger ist als die erste Maximalsolltemperatur (T-Soll_1), und
- wobei die Regelelektronik die zweite Maximalsolltemperatur (T-Soll_2) beibehält, wenn während des Beobachtungszeitraums eine manuelle Änderung der ersten Maximalsolltemperatur (T-Soll_1) auf die zweite Maximalsolltemperatur (T-Soll_2) erfolgt.

2. Verfahren nach Anspruch 1,
enthaltend den Verfahrensschritt,
dass der Warmwasserspeicher die selbsttätige Änderung der ersten Maximalsolltemperatur (T-Soll_1) auf die dritte Maximalsolltemperatur (T-Soll_3) anzeigt, insbesondere durch ein Symbol in einem Display oder eine Leuchtdiode.

3. Verfahren nach Anspruch 1 oder 2,
enthaltend den Verfahrensschritt,
dass die Regelelektronik die dritte Maximalsolltemperatur (T-Soll_3) auf Anforderung eines Benutzers vorübergehend auf eine vierte Maximalsolltemperatur (T-Soll_4) schaltet, wobei die vierte Maximalsolltemperatur (T-Soll_4) höher ist als die dritte Maximalsolltemperatur (T-Soll_3).

4. Verfahren nach Anspruch 3,
enthaltend die Verfahrensschritte,
- dass die Regelelektronik in einem weiteren Beobachtungszeitraum (B) überprüft, ob eine Änderung der vierten Maximalsolltemperatur (T-Soll_4) auf die zweite Maximalsolltemperatur (T-Soll_2) erfolgt und
- dass die Regelelektronik nach Ablauf des Beobachtungszeitraums (B) eine selbsttätige Änderung der vierten Maximalsolltemperatur (T-Soll_4) auf die dritte Maximalsolltemperatur (T-Soll_3) schaltet, wenn innerhalb des Beobachtungszeitraums (B) keine Änderung der vierten Maximalsolltemperatur (T-Soll_4) erfolgt.

5. Verfahren nach einem oder mehreren der vorhergehenden Ansprüche 1 bis 4,
enthaltend die Verfahrensschritte,
- dass in einem ersten Schritt eine Änderung der ersten Maximalsolltemperatur (T-Soll_1) auf die zweite Maximalsolltemperatur (T-Soll_2) und in einem zweiten Schritt eine weitere Änderung von der zweiten Maximalsolltemperatur (T-Soll_2) auf die vierte Maximalsolltemperatur (T-Soll_4) erfolgt und
- dass die Regelelektronik anschließend in dem Beobachtungszeitraum (B) überprüft, ob eine weitere Änderung von der vierten Maximalsolltemperatur (T-Soll_4) auf die zweite Maximalsolltemperatur (T-Soll_2) erfolgt,
- wobei die Regelelektronik nach Ablauf des Beobachtungszeitraums (B) die selbsttätige Änderung der vierten Maximalsolltemperatur (T-Soll_4) auf die zweite Maximalsolltemperatur (T-Soll_2) schaltet, wenn innerhalb des Beobachtungszeitraums (B) keine Änderung der vierten Maximalsolltemperatur (T-Soll_4) erfolgt.

6. Warmwasserspeicher mit einer Temperatursteuerung nach einem oder mehreren der vorhergehenden Ansprüche 1 bis 5.

## Claims

1. Process for the regulation of the temperature of a boiler with an electronic control unit to regulate the heating temperature of the boiler and at least a temperature sensor, in which the electronic control unit gives a maximum specified temperature (T-Spec_1), **characterised in that**
- the electric control unit initially checks whether a user manually changes the first maximum specified temperature (T-Spec_1) to a second maximum specified temperature (T-Spec_2) over a defined observation period (O), and
- the electric control unit automatically switches from the first maximum specified temperature (T-Spec_1) to a third maximum specified temperature if, and only if, a user does not manually change the first maximum specified temperature (T-Spec_1) to the second maximum specified temperature (T-Spec_2) within the observation period (O), whereby the third maximum specified temperature is lower than the first maximum specified temperature (T-Spec_1) and
- whereby the electronic control unit maintains the second maximum specified temperature when the first maximum specified temperature (T-Spec_1) is manually changed to the second maximum specified temperature (T-Spec_2) during the observation period (O).

2. Process according to Claim 1,
comprising the procedural step
that the boiler displays the automatic change from the first maximum specified temperature (T-Spec_1) to the third maximum specified temperature (T-Spec_3), in particular through displaying a symbol or a luminous diode.

3. Process according to Claim 1 or 2,
comprising the procedural step
that the electronic control unit temporarily switches from the third maximum specified temperature (T-Spec_3) to a fourth maximum specified temperature (T-Spec_4) when requested to do so by a user, whereby the fourth maximum specified temperature (T-Spec_4) is higher than the third maximum specified temperature (T-Spec_3).

4. Process according to Claim 3,
comprising the procedural steps
- that within a further observation period (O) the electronic control unit checks whether the fourth maximum specified temperature (T-Spec_4) is changed to the second maximum specified temperature (T-Spec_2) and
- that once the observation period (O) has expired, the electronic control unit automatically switches the fourth maximum specified temperature (T-Spec_4) to the third maximum specified temperature (T-Spec_3), if there is no change to the fourth maximum specified temperature (T-Spec_4) within the observation period (O).

5. Process according to one or several of the previous Claims 1 to 4,
comprising the procedural steps
- that in a first step, the first maximum specified temperature (T-Spec_1) is changed to the second maximum specified temperature (T-Spec_2) and in a second step, the second maximum specified temperature (T-Spec_1) is further changed to the fourth maximum specified temperature (T-Spec_4) and
- that within the observation period (O), the electronic control unit subsequently checks whether the fourth maximum specified temperature (T-Spec_4) is further changed to the second maximum specified temperature (T-Spec_2),
- whereby once the observation period (O) has expired, the electronic control unit automatically switches the fourth maximum specified temperature (T-Spec_4) to the second maximum specified temperature (T-Spec_2)if there is no change to the fourth maximum specified temperature (T-Spec_4) within the observation period (O).

6. Boiler with a temperature control according to one or several of the previous Claims 1 to 5.

## Revendications

1. Procédé de régulation de la température d'un réservoir d'eau chaude doté d'une commande électronique pour la régulation de la température de chauffage du réservoir de stockage d'eau chaude et, au minimum, d'un capteur de température,
où la commande électronique définit une température de consigne maximum (T-cons_1), **caractérisé en ce**
- **que** la commande électronique contrôle d'abord, sur une période d'observation définie (B), si un utilisateur a modifié manuellement la première température de consigne maximum (T-cons_1) en une deuxième température de consigne maximum (T-cons_2) et
- **que** la commande électronique modifie automatiquement la première température de consigne maximum (T-cons_1) en une troisième température de consigne maximum (T-cons_3), puis, seulement alors, commute la première température de consigne maximum (T-cons_1) en la deuxième température de consigne maximum (T-cons_2) lorsqu'aucun utilisateur n'a modifié manuellement la température pendant la période d'observation (B), et où la troisième température de consigne maximum (T-cons_3) est inférieure à la première température de consigne maximum (T-cons_1), et
- où la commande électronique maintient la deuxième température de consigne maximum (T-cons_2), lorsqu'une modification manuelle de la première température de consigne maximum (T-cons_1) en la deuxième température de consigne maximum (T-cons_2) a eu lieu pendant la période d'observation.

2. Procédé selon la revendication 1,
comprenant l'étape de procédé
selon laquelle le réservoir d'eau chaude affiche la modification automatique de la première température de consigne maximum (T-cons_1) en la troisième température de consigne maximum (T-cons_3) par un symbole à l'écran ou une diode électroluminescente.

3. Procédé selon la revendication 1 ou 2,
comprenant l'étape de procédé
selon laquelle la commande électronique commute temporairement la troisième température de consigne maximum (T-cons_3) en une quatrième température de consigne maximum (T-cons_4) à la demande d'un utilisateur, et où la quatrième température de consigne maximum (T-cons_4) est supérieure à la troisième température de consigne maximum (T-cons_3).

4. Procédé selon la revendication 3,
comprenant les étapes de procédé
- selon lesquelles la commande électronique contrôle, au cours d'une nouvelle période d'observation (B), si la quatrième température de consigne maximum (T-cons_4) a été modifiée en la deuxième température de consigne maximum (T-cons_2) et
- la commande électronique commute automatiquement la quatrième température de consigne maximum (T-cons_4) en la troisième température de consigne maximum (T-cons_3) après écoulement de la période d'observation (B), lorsqu'aucune modification de la quatrième température de consigne maximum (T-cons_4) n'a eu lieu pendant la période d'observation (B).

5. Procédé selon l'une ou plusieurs des revendications 1 à 4 précédentes, comprenant les étapes de procédé
- selon lesquelles, lors d'une première étape, la première température de consigne maximum (T-Soll_1) est modifiée en la deuxième température de consigne maximum (T-Soll_2) et, lors d'une seconde étape, la deuxième température de consigne maximum (T-Soll_2) est modifiée en la quatrième température de consigne maximum (T-cons_4) et
- la commande électronique contrôle ensuite, pendant la période d'observation (B), si la quatrième température de consigne maximum (T-cons_4) a été à nouveau modifiée en la deuxième température de consigne maximum (T-cons_2),
- où la commande électronique commute automatiquement la quatrième température de consigne maximum (T-cons_4) en la deuxième température de consigne maximum (T-cons_2) après écoulement de la période d'observation (B), lorsqu'aucune modification de la quatrième température de consigne maximum (T-cons_4) n'a eu lieu pendant la période d'observation (B).

6. Réservoir d'eau chaude à régulation de température selon l'une ou plusieurs des revendications 1 à 5 précédentes.
